(19) Europäisches Patentamt
European Patent Office
Office européen des brevets

(11) **EP 2 902 867 B1**

(12) **EUROPEAN PATENT SPECIFICATION**

(45) Date of publication and mention
of the grant of the patent:
**11.07.2018 Bulletin 2018/28**

(51) Int Cl.:
*G06F 1/16* (2006.01)      *G06F 3/0488* (2013.01)

(21) Application number: **14190580.2**

(22) Date of filing: **28.10.2014**

(54) **Portable apparatus and method for adjusting window size thereof**

Tragbare Vorrichtung und Verfahren zur Anpassung der Fenstergröße davon

Appareil portable et procédé de réglage de taille de fenêtre de celui-ci

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.01.2014 TW 103103595**

(43) Date of publication of application:
**05.08.2015 Bulletin 2015/32**

(73) Proprietor: **Acer Incorporated
New Taipei City 221 (TW)**

(72) Inventor: **Lin, Hsuan-Wei
221 Xizhi Dist., New Taipei City (TW)**

(74) Representative: **2K Patentanwälte Blasberg
Kewitz & Reichel
Partnerschaft mbB
Schumannstrasse 27
60325 Frankfurt am Main (DE)**

(56) References cited:
**US-A1- 2009 303 204      US-A1- 2012 256 959
US-A1- 2013 286 573**

• **DATABASE EPODOC [Online] EUROPEAN
PATENT OFFICE, THE HAGUE, NL; 3 May 2013
(2013-05-03), XP002740286, Database accession
no. CN-201210593607-A -& CN 103 076 972 A (ZTE
CORP) 1 May 2013 (2013-05-01)**

**Description**

Field of the Invention

The present invention is directed to a portable apparatus and an operation method thereof and more particularly, to a portable apparatus and a method for adjusting a window size thereof.

Description of Related Art

With the development of technologies, electronic apparatuses, such as smart phones and tablet PCs, have become increasingly popular, and touch technologies therewith provide plentiful and humanized human-machine interaction.

Recently, the electronic apparatuses using touch screens as operation tools are gradually developed toward being equipped with large-size touch screens for the convenience of users' operations, so as to meet various demands of the users, such as document composing, email receiving and sending, web browsing, multi-media watching, or using instant message software.

US 2012/256959A1, discloses a method of controlling a mobile device configured with a touch-sensitive display and a motion sensor is provided. The method includes: the step of detecting a contact with the touch-sensitive display while the mobile device is in a first state to determine whether the detected contact corresponds to a predefined icon; the step of detecting a rotation or movement with the motion sensor while the mobile device is in the first state to determine whether the detected rotation or the movement corresponds to a predefined gesture; and the step of transitioning the mobile device to a second state when the detected contact corresponds to the predefined icon, and the detected rotation or movement corresponds to the predefined gesture.

US 2009/303204 A1, provides various embodiments provide systems and methods capable of facilitating interaction with handheld electronics devices based on sensing rotational rate around at least three axes and linear acceleration along at least three axes. In one aspect, a handheld electronic device includes a subsystem providing display capability, a set of motion sensors sensing rotational rate around at least three axes and linear acceleration along at least three axes, and a subsystem which, based on motion data derived from at least one of the motion sensors, is capable of facilitating interaction with the device.

CN 103076972 A, discloses a method for operating a large-screen handheld device through a single hand, and the method comprises the following steps of presetting a touch control area in a single-hand operation range of a display screen, wherein the touch control area is used for receiving a touch instruction; measuring a deflection angle of the handheld device when the touch instruction falling in the touch control area is received and the handheld device is sensed to rotate along one direction; and calculating the displacement deviation of the handheld device according to the deflection angle, and activating display content corresponding to the touch instruction according to the displacement deviation. The invention also discloses a handheld device. By adopting the scheme, the problem that the large-screen handheld device is difficult to operate can be solved, a user can be enabled to operate all functions of the handheld device through one hand, and the application experience of the handheld device can be greatly enhanced.

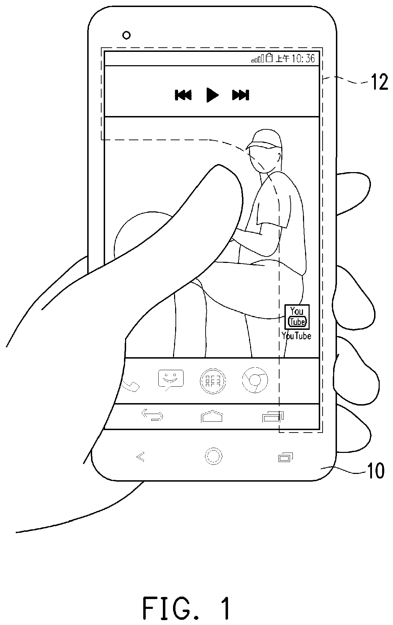

However, a large-size touch screen is inconvenient for a user to hold with one hand. Referring to Fig. 1, with limitation of a palm size, partial area 12 of a touch screen 10 cannot be operated by the user with one hand. As a result, the user has to operate the touch screen with both hands, which causes difficulty and inconvenience the operations of the user.

SUMMARY

Accordingly, the invention provides a portable apparatus and a method for adjusting a window size thereof, by which a user can adjust or zoom a window by using simple gestures and thus, can operate the portable apparatus with one hand conveniently.

The invention is directed to a method for adjusting a window size, which is adapted for a portable apparatus having a touch screen and a motion sensor. In the method, a touch operation performed on the touch screen is detected. When the touch operation is detected, a rotation angle and a rotation direction of the portable apparatus relative to a reference axis perpendicular to the touch screen are detected by using the motion sensor, and whether the rotation angle is over a threshold is determined. When the rotation angle is over the threshold, a size of a window displayed on the touch screen is adjusted according to a touch position of the touch operation and the rotation direction.

The invention is directed to a portable apparatus, including a touch screen, a motion sensor and a processor. The touch screen is configured to detect a touch operation and display a window. The motion sensor is configured to detect a rotation angle and a rotation direction of the portable apparatus relative to a reference axis perpendicular to the touch screen. The processor is coupled to the touch screen and the motion sensor and configured to determine whether the rotation angle detected by the motion sensor is over a threshold when the touch operation is detected by the touch screen and adjust a size of a window displayed on the touch screen according to a touch position of the touch operation and the rotation direction when the rotation angle is over the threshold.

Based on the above, the portable apparatus and the method for adjusting the window size thereof combine the touch operation with wobbling gestures. Thereby, the screen window can be zoomed into a range that is operable by the user with one hand, and the user can operate functions of the apparatus conveniently.

To make the above features and advantages of the invention more comprehensible, embodiments accompanied with drawings are described in detail below.

## BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

Fig. 1 is a schematic diagram illustrating a conventional large-size touch screen.
Fig. 2 is a block diagram illustrating a portable apparatus having an adjustable window according to one embodiment of the present invention.
Fig. 3 is a flowchart illustrating a method for adjusting a window size according to an embodiment of the invention.
Fig. 4 is a flowchart illustrating a method for adjusting a window size according to an embodiment of the invention.
Fig. 5(a) and Fig. 5(b) illustrate an example of adjusting a window size according to an embodiment of the invention.
Fig. 6(a) and Fig. 6(b) illustrate an example of adjusting a window size according to an embodiment of the invention.

## DESCRIPTION OF EMBODIMENTS

For a large-size touch screen, an area that can be touched by a user with one hand is limited, and thus, in the invention, a size of a window may be adjusted according to a position that is touchable by one hand. The invention combines the touch operation of the user with wobbling gestures so as to determine whether the user is desired to adjust the window size. The size of the window to be adjusted is determined according to a position of a touch operation when adjusting the size of the window. A position (i.e., a position where the touch operations is performed) of the adjusted window that is the farthest away from a palm (or an edge of the screen) is still within a range that is touchable by the user, and thereby, one-hand operation can be achieved.

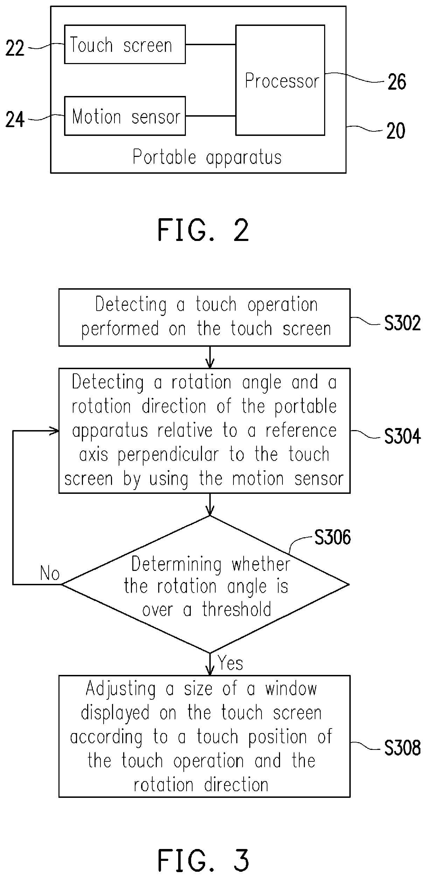

Fig. 2 is a block diagram illustrating a portable apparatus having an adjustable window according to one embodiment of the present invention. Referring to FIG. 2, a portable apparatus 20 may be, for example, any type of electronic apparatus having a touch and display capability, such as a mobile phone, a smart phone, a personal digital assistant (PDA) or a tablet PC, and the type of the portable apparatus 20 is not limited in the invention.

The portable apparatus 20 includes a touch screen 22, a motion sensor 24 and a processor 26. The touch screen 22 is an input and output interface of the portable apparatus 20, and is configured to display various types of screen frames of the portable apparatus 20 and detect a touch operation performed by the user on the screen frame. The touch screen 22 is, for example a liquid crystal display (LCD), a light-emitting diode (LED) display, a field emission display (FED) or any other type display, which is assembled with a touch panel, such as a resistive or a capacitive touch panel, to provide both a display and a touch operation capabilities.

The motion sensor 24 is for example, a 3-axis gravity sensor (G-sensor), a magnetic sensor or a gyro sensor. The motion sensor 24 may also be a 6-axis gravity/gyro sensor combining gravity sensing and angular momentum sensing, a 6-axis gravity/magnetic sensor combining gravity sensing and magnetic sensing, or a 9-axis gravity/magnetic/gyro sensor combining gravity sensing, magnetic sensing and angular momentum sensing, which is not limited in the invention. The motion sensor 24 is configured to detect a rotation angle and a rotation direction of the portable apparatus 20 relative to a reference axis perpendicular to the touch screen 22. In one embodiment, the rotation angle may be obtained, for example, by calculating a yaw angular velocity sensed by a gryo sensor, and the yaw angular velocity is an angular velocity of the portable apparatus 20 rotating with the Z-axis perpendicular to the touch screen 22 as a center. By substituting a yaw angular velocity $\omega$ in to the following formula (1), a converted rotation angle Z may be obtained.

$$Z = \omega \times (180/\pi) \times s \qquad (1)$$

Therein, s represents time, and whether a value of the rotation angle Z is positive or negative represents the rotation, namely, a positive value of the rotation angle Z represents a clockwise rotation direction, while a negative value of the rotation Z represents a counterclockwise rotation direction.

The processor 26 is coupled to the touch screen 22 and the motion sensor 24. The processor 26 may be a central processing unit (CPU) having a single core or multiple cores or any other programmable microprocessor, digital signal processor (DSP), programmable controller, application specific integrated circuit (ASIC), other similar devices, or a combination of these devices utilized for general or specific application. In the present embodiment, the processor 26 may execute a computer program to perform a method for adjusting a window size provided by the invention.

In detail, Fig. 3 is a flowchart illustrating a method for adjusting a window size according to an embodiment of the invention. Referring to FIG. 2 and FIG. 3, the method of the present embodiment is adapted for the portable apparatus 20, and each step of the method of the present embodiment will be described in detail with reference to each element of the portable apparatus 20 illustrated in FIG. 2.

First, the portable apparatus 20 detects a touch operation performed by the user on the touch screen 22 by using the touch screen 22 (step S302). The aforementioned touch operation includes various kinds of gestures, such as a single-click, a double-click or a long press, or a combination thereof, which is not limited in the invention. It is to be mentioned that when the touch operation is detected by the touch screen 22, the processor 26, for example, first determines whether the touch operation is within a predetermined area displayed on the touch screen 22 so as to determine whether to continue the follow-up steps of the method of the present embodiment. The predetermined area may be, for example, a screen to be unlocked of the portable apparatus 20, an area except for a touchable object (e.g., an application icon) within a locked screen, or a screen frame of specific application (e.g., a screen frame of instant messaging software or game software). By way of limiting the touch operation within the predetermined area, the touch operation for the user to adjust the window size may be distinguished from a function initially set for the touch operation by the portable apparatus 20, and in this way, the use of the touch operation may be more flexible.

Returning to the process of Fig. 2, when the touch operation is detected by the touch screen 22, the portable apparatus 20 detects a rotation angle and a rotation direction of the portable apparatus 20 relative to a reference axis perpendicular to the touch screen 22 by using the motion sensor 24 (step S304). In one embodiment, the portable apparatus 20 drives the motion sensor 24 to detect the rotation angle and the rotation direction of the portable apparatus 20 only when the touch operation is detected by the touch screen 22. In another embodiment, the portable apparatus 20 may also continue to detect the rotation angle and the rotation direction by using the motion sensor 24. When the touch operation is detected by the touch screen 22, the processor 26 retrieves the rotation angle and the rotation direction detected thereby from the motion sensor 24 and then continues the determinations steps, but the invention is not limited thereto.

After the rotation angle and the rotation direction are detected by the motion sensor 24, the processor 26 further determines whether the rotation angle is over a threshold (step S306). The threshold, for example, ranges from 30 to 45 degrees and may be freely set by the user depending on the demand of detecting sensitivity.

When determining that the rotation angle is over the threshold, the processor 26 adjusts a size of a window displayed on the touch screen 22 according to a touch position of the touch operation and the rotation direction (step S308). Otherwise, when the processor 26 determines that the rotation angle is not over the threshold, the method returns to step S304, and the rotation angle and the rotation direction of the portable apparatus 20 are continuously detected. When adjusting the size of the window, the processor 26, for example, proportionally adjusts or zooms (i.e., the original proportion of the window is maintained) the size of the window according to a square area formed by the touch position and a side edge and a lower edge of the touch screen 22, such that the adjusted window is located within the square area and has a height identical to a height of the square area or has a width identical to a width of the square area. That is, a display range of the adjusted window does not exceed the square area, such that the user may operate with one hand conveniently.

It should be mentioned that in one embodiment, the side edge of the touch screen is, for example, a side edge having a longer distance away from the touch position, and as if the rotation angle rotated by the user in any direction (i.e., clockwise or counterclockwise) is over the threshold, the processor 26 adjusts or zooms the size of the window according to the square area formed by the touch position and the side edge and the lower edge, such that the adjusted window is located within the square area, and the height or the width of the adjusted window is identical to that of the square area. For example, if the user holds the portable apparatus 20 with his/her left hand for operation, and a position touched and operated by the user is located in the right half part of the touch screen 22, the touch position is away from the left-side edge of the touch screen 22. Thus, the processor 26 adjusts or zooms the size of the window according to the square area formed by the touch position and the left-side edge and the lower edge. Meanwhile, the adjusted window is located at the lower left of the touch screen 22, and in this way, it is just right for the user to perform the one-hand operation with his/her left hand.

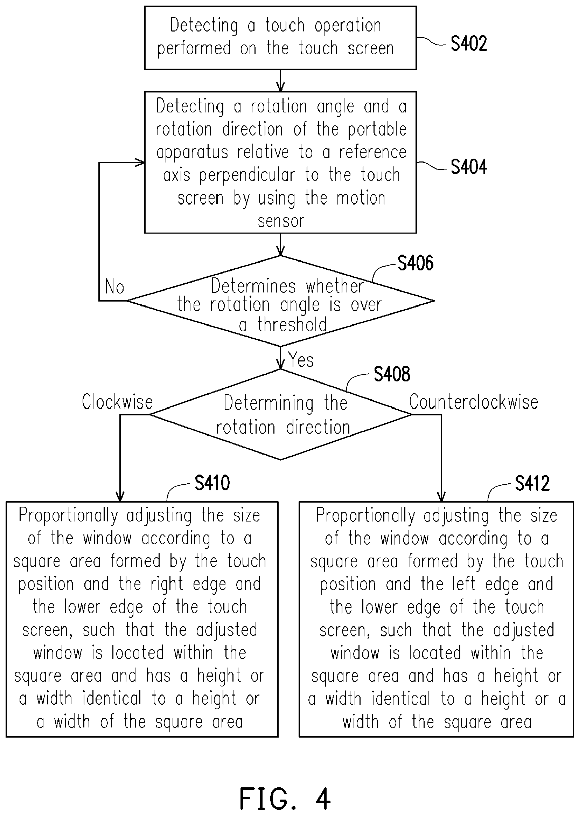

The rotation direction of the portable apparatus 20 is not limited in the embodiment above. However, in another embodiment, the square area used for adjusting the size of the window may be further determined by combining the rotation direction of the portable apparatus 20, and by doing so, the adjusted window may satisfy what is currently needed by the user. To be more detailed, Fig. 4 is a flowchart illustrating a method for adjusting a window size according to an embodiment of the invention. Referring to FIG. 4 together with FIG. 2, the method of the present embodiment is adapted for the portable apparatus 20, and each step of the method of the present embodiment will be described in detail with reference to each element of the portable apparatus 20 illustrated in FIG. 2.

First, the portable apparatus 20 detects a touch operation performed by the user on the touch screen 22 by using the touch screen 22 (step S402). When the touch operation is detected by the touch screen 22, the portable apparatus 20 detects a rotation angle and a rotation direction of the portable apparatus 20 relative to a reference axis perpendicular to the touch screen 22 by using the motion sensor 24 (step S404). After the rotation angle and the rotation direction are detected by the motion sensor 24, the processor 26 further determines whether the rotation angle is over a threshold (step S406). Steps S402 to S406 are the same as or similar to steps S302 to S306 in the previous embodiment, so the detailed contents are not repeated herein.

Different from the previous embodiment, in the present embodiment, the processor 26 continues to detect the rotation direction when determining that the rotation angle is over the threshold (S408). The rotation direction is determined according to a positive or a negative value of a rotation angle which is calculated by converting a yaw angular velocity sensed by a gyro sensor into the rotation angle. That is, the rotation angle calculated as positive represents the clockwise rotation direction, and the rotation angle calculated as negative represents the counterclockwise rotation direction.

It should be mentioned that when determining that the rotation direction is clockwise, the processor 26 proportionally adjusts the size of the window according to the square area formed by the touch position and the right-side edge and the lower edge of the touch screen 22, such that the adjusted window is located within the square area, and the height or the width of the adjusted window is identical to that of the square area (step S410). Relatively, when determining that the rotation direction is counterclockwise, the processor 26 proportionally adjusts the size of the window according to the square area formed by the touch position and the left-side edge and the lower edge of the touch screen 22, such that the adjusted window is located within the square area, and the height or the width of the adjusted window is identical to that of the square area (step S412).

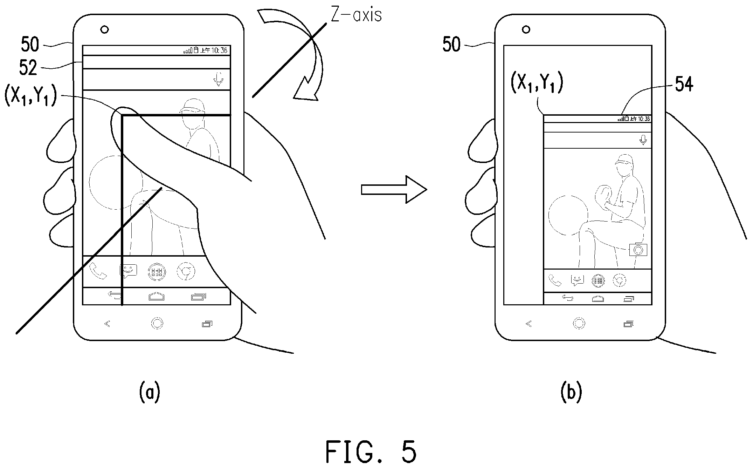

For example, Fig. 5(a) and Fig. 5(b) illustrate an example of adjusting a window size according to an embodiment of the invention. Referring to Fig. 5(a) first, when the user touches a position $(X_1, Y_1)$ on a touch screen of a portable apparatus 50, the portable apparatus 50 detects a rotation angle and a rotation angle relative to the Z-axis perpendicular to the touch screen. When the user wobbles the portable apparatus 50 clockwise for more than 30 degrees, the portable apparatus 50 adjusts the original window 52 to be located within a square area formed by the touch position $(X_1, Y_1)$ and the right-side ledge and the lower ledge of the touch screen , and thereby, an adjusted window 54 as shown in Fig. 5(b) is presented.

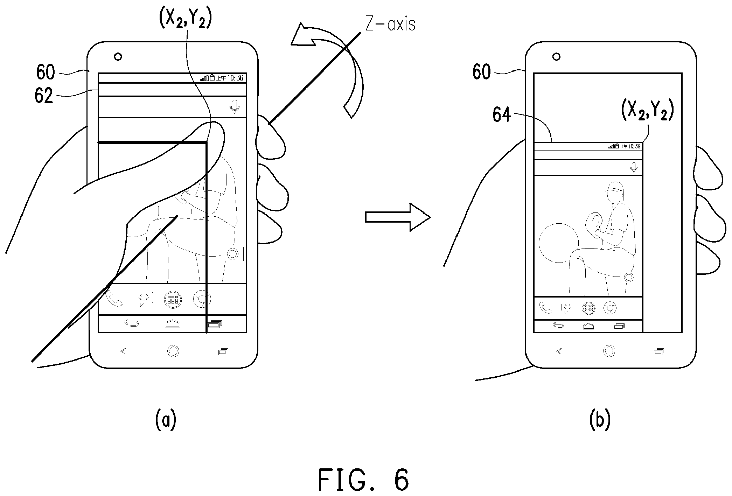

On the other hand, Fig. 6(a) and Fig. 6(b) illustrate an example of adjusting a window size according to an embodiment of the invention. Referring to Fig. 6(a) first, when the user touches a position $(X_2, Y_2)$ on a touch screen of a portable apparatus 60, the portable apparatus 60 detects a rotation angle and a rotation angle relative to the Z-axis perpendicular to the touch screen. When the user wobbles the portable apparatus 60 counterclockwise for more than 30 degrees, the portable apparatus 60 adjusts the original window 62 to be located within a square area formed by the touch position $(X_2, Y_2)$ and the left-side ledge and the lower ledge of the touch screen, and thereby, an adjusted window 64 as shown in Fig. 6(b) is presented.

By the above-described method, the user is able to adjust the window to a desired size quickly in a scenario of one-hand operation only through the use of simply touch and wobbling gestures, which is convenient for the user to operate the portable apparatus with one single hand. Moreover, the user may repeat the above-described operation steps to adjust the window to a desired size.

It should be mentioned that in addition to the method for adjusting the window size above, the invention also provide a method for recovering the window size. The difference between the method for recovering the window size and the method for adjusting the window size lies in that the user may touch any point on the touch screen and wobble the portable apparatus in a direction reversed to the direction that the user previously wobbles the portable apparatus.

In detail, after adjusting the size of the window displayed on the touch screen according to the touch position of the user's touch operation and the rotation direction, the processor continues to detect another touch operation performed by the user on the touch screen, when another touch operation is detected by the touch screen, another rotation angle and another rotation direction relative to the reference axis perpendicular to the touch screen are detected by using the motion sensor 24, and whether such rotation angle is reversed to the rotation angle detected previously in the operation of adjusting the window and over the threshold is determined. When such rotation angle is reversed to the rotation angle detected previously in the operation of adjusting the window and over the threshold, the processor adjusts the size of the window back to the original size. For example, if the user previously adjusts the size of the window by pressing the touch screen and rotating the portable apparatus clockwise, the previously adjusted window will be recovered to the original size when the user again presses the touch screen and rotate the portable apparatus counterclockwise.

To sum up, the portable apparatus and the method for adjusting the window size thereof combines the touch operations of the user with the wobbling gestures of the portable apparatus. Thereby, even when operating a large-size touch screen, the user still can adjust the window size with one hand and adjust the window to a desired size in one-time operation. Thereby, the user can conveniently operate a portable apparatus with a large-size touch screen with one hand.

**Claims**

1.  A method for adjusting a window size, adapted for a portable apparatus (20) having a touch screen (22) and a motion sensor (24), comprising:

    detecting (S302) a touch operation performed on the touch screen (22);
    detecting (S304) a rotation angle and a rotation direction of the portable apparatus (20) relative to a reference axis perpendicular to the touch screen (22) by using the motion sensor (24) when the touch operation is detected, and determining (S306) whether the rotation angle is over a threshold; and
    adjusting (S308) a size of a window displayed on the touch screen (22) according to a touch position of the touch operation and the rotation direction when the rotation angle is over the threshold.

2.  The method according to claim 1, wherein the step of adjusting the size of the window displayed on the touch screen (22) according to the touch position of the touch operation and the rotation direction comprises:
    proportionally adjusting (S410, S412) the size of the window according to a square area formed by the touch position and a side edge and a lower edge of the touch screen (22), such that the adjusted window is located within the square area and has a height identical to a height of the square area or has a width identical to a width of the square area.

3.  The method according to claim 2, wherein the side edge is the side edge of the touch screen (22) on the rotation direction or the side edge having a longer distance away from the touch position.

4.  The method according to any of the claims 1 to 3, wherein the step of adjusting the size of the window displayed on the touch screen (22) according to the touch position of the touch operation and the rotation direction further comprises:

    detecting another touch operation performed on the touch screen (22);
    detecting another rotation angle and another rotation direction of the portable apparatus (20) relative to the reference axis perpendicular to the touch screen (22) by using the motion sensor (24) when said another touch operation is detected, and determining whether said another rotation angle is reversed to the rotation angle and over the threshold; and
    when said another rotation angle is reversed to the rotation angle and over the threshold, adjusting the size of the window back to an original size.

5.  The method according to any of the claims 1 to 4, wherein when the touch operation is detected, the method further comprises:

    determining whether the touch operation is located within a predetermined area; and
    detecting the rotation angle and the rotation direction of the portable apparatus (20) relative to the reference axis perpendicular to the touch screen (22) by using the motion sensor (24) only when the touch operation is within the predetermined area.

6.  The method according to claim 5, wherein the predetermined area comprises a screen to be unlocked, an area except for at least one touchable object in a locked screen, or a screen of a specific application.

7.  The method according to any of the claims 1 to 6, wherein the touch operation comprises one or a combination of a single-click, a double-click and a long press.

8.  The method according to any of the claims 1 to 7, wherein the threshold ranges from 30 to 45 degrees.

9.  A portable apparatus (20), comprising:

    a touch screen (22), detecting a touch operation and displaying a window;
    a motion sensor (24), detecting a rotation angle and a rotation direction of the portable apparatus (20) relative to a reference axis perpendicular to the touch screen (22); and
a processor, coupled to the touch screen (22) and the motion sensor (24), determining whether the rotation angle detected by the motion sensor (24) is over a threshold when the touch operation is detected by the touch screen (22), and adjusting a size of a window displayed on the touch screen (22) according to a touch position of the touch operation and the rotation direction when the rotation angle is over the threshold,.

10. The portable apparatus according to claim 9, wherein the processor proportionally adjusts the size of the window according to a square area formed by the touch position and a side edge and a lower edge of the touch screen (22), such that the adjusted window is located within the square area and has a height identical to a height of the square area or has a width identical to a width of the square area, wherein the side edge is the side edge on the rotation direction or the side edge having a longer distance away from the touch position.

11. The portable apparatus according to claim 9 or 10, wherein the processor further determines whether another rotation angle detected by the motion sensor (24) is reversed to the rotation angle and over the threshold when another touch operation performed on the touch screen (22) is detected, and adjusts the size of the window back to the original size when said another rotation angle is reversed to the rotation angle and over the threshold.

12. The portable apparatus according to any of the claims 9 to 11, wherein the processor further determines whether the touch operation is located within a predetermined area when the touch operation is detected by the touch screen (22) and detects the rotation angle and the rotation direction of the portable apparatus (20) relative to the reference axis perpendicular to the touch screen (22) by using the motion sensor (24) when the touch operation is within the predetermined area, wherein the predetermined area comprises a screen to be unlocked, an area except for at least one touchable object in a locked screen, or a screen of a specific application.

13. The portable apparatus according to any of the claims 9 to 12, wherein the touch operation comprises one or a combination of a single-click, a double-click and a long press.

14. The portable apparatus according to any of the claims 9 to 13, wherein the threshold ranges from 30 to 45 degrees.

15. The portable apparatus according to any of the claims 9 to 14, wherein the motion sensor (24) comprises one or a combination of a gravity sensor (G-sensor), a magnetic sensor, a gyro sensor and an electronic compass.

**Patentansprüche**

1. Verfahren zum Einstellen einer Fenstergröße, ausgebildet für ein tragbares Gerät (20) mit einem Touchscreen (22) und einem Bewegungssensor (24), umfassend:

   Erfassen (S302) einer auf dem Touchscreen (22) ausgeführten Berührungsoperation;
   Erfassen (S304) eines Drehwinkels und einer Drehrichtung des tragbaren Gerätes (20) relativ zu einer Bezugsachse senkrecht zum Touchscreen (22) unter Verwendung des Bewegungssensors (24), wenn der Berührungvorgang erkannt wird, und Bestimmen (S306), ob der Drehwinkel über einer Schwellwert liegt; und
   Einstellen (S308) einer Fenstergröße, die auf dem Touchscreen (22) angezeigt wird, entsprechend einer Berührungsposition der Berührungsoperation und der Drehrichtung, wenn der Drehwinkel über der Schwellwert liegt.

2. Das Verfahren nach Anspruch 1, wobei der Schritt des Einstellens der Größe des auf dem Touchscreen (22) angezeigten Fensters entsprechend der Berührungsposition der Berührungsoperation und der Drehrichtung umfasst:
   die Größe des Fensters entsprechend einer quadratischen Fläche, die durch die Berührungsposition und eine Seitenkante und eine Unterkante des Touchscreens (22) gebildet wird, proportional einstellen (S410, S412), so dass sich das eingestellte Fenster innerhalb der quadratischen Fläche befindet und eine Höhe hat, die mit einer Höhe der quadratischen Fläche identisch ist, oder eine Breite hat, die mit einer Breite der quadratischen Fläche identisch ist.

3. Das Verfahren nach Anspruch 2, wobei die Seitenkante die Seitenkante des Touchscreens (22) in Drehrichtung ist oder die Seitenkante einen größeren Abstand von der Berührungsposition hat.

**4.** Das Verfahren nach einem der Ansprüche 1 bis 3, wobei der Schritt des Einstellens der Größe des auf dem Touchscreen (22) angezeigten Fensters entsprechend der Berührungsposition der Berührungsoperation und der Drehrichtung weiterhin umfasst:

Erkennung einer weiteren Berührungsoperation auf dem Touchscreen (22);
Erfassen eines anderen Drehwinkels und einer anderen Drehrichtung des tragbaren Geräts (20) relativ zu der Bezugsachse senkrecht zum Touchscreen (22) unter Verwendung des Bewegungssensors (24), wenn der andere Berührungsvorgang erfasst wird, und bestimmen, ob der andere Drehwinkel in Bezug zu dem Drehwinkel umgekehrt wird, und über dem Schwellwert liegt; und
wenn der andere Drehwinkel in Bezug zu dem Drehwinkel umgekehrt ist und über dem Schwellwert liegt, wird die Größe des Fensters wieder auf eine Originalgröße eingestellt.

**5.** Das Verfahren nach einem der Ansprüche 1 bis 4, wobei das Verfahren ferner umfasst, wenn der Berührungsvorgang erkannt wird:

Bestimmen, ob sich der Berührungsvorgang innerhalb eines vorbestimmten Bereichs befindet; und
Erfassen des Drehwinkels und der Drehrichtung des tragbaren Geräts (20) relativ zur Bezugsachse senkrecht zum Touchscreen (22) unter Verwendung des Bewegungssensors (24) nur darin, wenn sich der Berührungsvorgang innerhalb des vorgegebenen Bereichs befindet.

**6.** Das Verfahren nach Anspruch 5, wobei der vorbestimmte Bereich einen zu entsperrenden Bildschirm, einen Bereich mit Ausnahme mindestens eines berührbaren Objekts in einem gesperrten Bildschirm oder einen Bildschirm einer bestimmten Anwendung umfasst.

**7.** Das Verfahren nach einem der Ansprüche 1 bis 6, wobei die Berührungsoperation einen oder eine Kombination aus einem Einfachklick, einem Doppelklick und einem langen Druck umfasst.

**8.** Das Verfahren nach einem der Ansprüche 1 bis 7, wobei der Schwellwert zwischen 30 und 45 Grad liegt.

**9.** Tragbares Gerät (20), umfassend:

einen Touchscreen (22), der eine Berührungsoperation erkennt und ein Fenster anzeigt;
einen Bewegungssensor (24), der einen Drehwinkel und eine Drehrichtung des tragbaren Geräts (20) relativ zu einer Bezugsachse senkrecht zum Touchscreen (22) erfasst; und
einen Prozessor, der mit dem Touchscreen (22) und dem Bewegungssensor (24) gekoppelt ist, der bestimmt, ob der von dem Bewegungssensor (24) erfasste Drehwinkel über einen Schwellwert liegt, wenn der Berührungsvorgang von dem Touchscreen (22) erfasst wird, und eine Größe eines auf dem Touchscreen (22) angezeigten Fensters entsprechend einer Berührungsposition des Berührungsvorgangs und der Drehrichtung einstellt, wenn der Drehwinkel über dem Schwellwertwert liegt.

**10.** Das tragbare Gerät nach Anspruch 9, wobei der Prozessor die Größe des Fensters entsprechend einer quadratischen Fläche, die durch die Berührungsposition und eine Seitenkante und eine Unterkante des Touchscreens (22) gebildet wird, proportional einstellt, so dass sich das eingestellte Fenster innerhalb der quadratischen Fläche befindet und eine Höhe aufweist, die mit einer Höhe der quadratischen Fläche identisch ist oder eine Breite aufweist, die mit einer Breite der quadratischen Fläche identisch ist, wobei die Seitenkante die Seitenkante in der Drehrichtung ist oder die Seitenkante einen größeren Abstand von der Berührungsposition hat.

**11.** Das tragbare Gerät nach Anspruch 9 oder 10, wobei der Prozessor ferner bestimmt, ob ein anderer vom Bewegungssensor (24) erfasster Drehwinkel zu dem Drehwinkel gegenläufig ist und über dem Schwellwert liegt, wenn ein anderer Berührungsvorgang auf dem Touchscreen (22) erfasst wird, und die Größe des Fensters wieder auf die ursprüngliche Größe einstellt, wenn der andere Drehwinkel zu dem Drehwinkel gegenläufig ist und über dem Schwellwert liegt.

**12.** Das tragbare Gerät nach einem der Ansprüche 9 bis 11, wobei der Prozessor ferner bestimmt, ob sich der Berührungsvorgang innerhalb eines vorbestimmten Bereichs befindet, wenn der Berührungsvorgang durch den Berührungsbildschirm (22) erfasst wird, und den Drehwinkel und die Drehrichtung des tragbaren Geräts (20) relativ zu der Bezugsachse senkrecht zum Berühruhgsbildschirm (22) unter Verwendung des Bewegungssensors (24) erfasst, wenn sich der Berührungsvorgang innerhalb des vorbestimmten Bereichs befindet, wobei der vorbestimmte Bereich einen zu entriegelnden Bildschirm, einen Bereich außer mindestens einem berührbaren Objekt in einem gesperrten Bildschirm oder einen Bildschirm einer bestimmten Anwendung umfasst.

**13.** Das tragbare Gerät nach einem der Ansprüche 9 bis 12, wobei die Berührungsoperation einen oder eine Kombination aus einem Einfachklick, einem Doppelklick und einem langen Druck umfasst.

**14.** Das tragbare Gerät nach einem der Ansprüche 9 bis 13, wobei derSchwellwert im Bereich von 30 bis 45 Grad liegt.

**15.** Das tragbare Gerät nach einem der Ansprüche 9 bis 14, wobei der Bewegungssensor (24) einen oder eine Kombination aus einem Schwerkraftsensor (G-Sensor), einem Magnetsensor, einem Gyrosensor und einem elektronischen Kompass umfasst.

**Revendications**

**1.** Un procédé pour ajuster une taille de fenêtre, adapté pour un appareil portable (20) ayant un écran tactile (22) et un détecteur de mouvement (24), comprenant:

la détection (S302) d'une opération tactile effectuée sur l'écran tactile (22);
la détection (S304) d'un angle de rotation et d'une direction de rotation de l'appareil portable (20) par rapport à un axe de référence perpendiculaire à l'écran tactile (22) en utilisant le capteur de mouvement (24) lorsque l'opération tactile est détectée, et la détermination (S306) du fait de savoir si l'angle de rotation excède un seuil ; et le réglage (S308) d'une dimension d'une fenêtre affichée sur l'écran tactile (22) en fonction d'une position tactile de l'opération tactile et de la direction de rotation lorsque l'angle de rotation est supérieur au seuil.

**2.** Le procédé selon la revendication 1, dans lequel l'étape de réglage de la dimension de la fenêtre affichée sur l'écran tactile (22) en fonction de la position tactile de l'opération tactile et de la direction de rotation comprend:
un réglage proportionnel (S410, S412) de la dimension de la fenêtre selon une zone carrée formée par la position tactile et un bord latéral et un bord inférieur de l'écran tactile (22), de sorte que la fenêtre réglée se situe à l'intérieur de la zone carrée et présente une hauteur identique à la hauteur de la zone carrée ou a une largeur identique à une largeur de la zone carrée.

**3.** Le procédé selon la revendication 2, dans lequel le bord latéral est le bord latéral de l'écran tactile (22) dans la direction de rotation ou le bord latéral a une distance plus éloignée de la position tactile.

**4.** Le procédé selon l'une quelconque des revendications 1 à 3, dans lequel l'étape de réglage de la dimension de la fenêtre affichée sur l'écran tactile (22) en fonction de la position contact de l'opération tactile et de la direction de rotation comprend en outre:

la détection d'une autre opération tactile effectuée sur l'écran tactile (22);
la détection d'un autre de rotation et une autre direction de rotation de l'appareil portable (20) par rapport à l'axe de référence perpendiculaire à l'écran tactile (22) en utilisant le capteur de mouvement (24) lorsque ladite autre opération tactile est détectée, et
la détermination de savoir si l'autre angle de rotation est inversée vis-à-vis de l'angle de rotation et supérieur au seuil ; et
lorsque ledit autre angle de rotation est inversée par rapport à l'angle de rotation et excède le seuil, le réglage de la dimension de l'écran pour le faire revenir à sa dimension originelle.

**5.** Le procédé selon l'une quelconque des revendications 1 à 4, dans lequel, lorsque l'opération tactile est détectée, le procédé comprend en outre:

la détermination de savoir si l'opération tactile est située dans une zone prédéterminée; et
la détection de l'angle de rotation et de la direction de rotation de l'appareil portable (20) par rapport à l'axe de référence perpendiculaire à l'écran tactile (22) en utilisant le détecteur de mouvement (24) uniquement lorsque l'opération tactile est dans la zone prédéterminée.

**6.** Le procédé selon la revendication 5, dans lequel la zone prédéterminée comprend un écran à déverrouiller, une zone à l'exception d'au moins un objet que l'on peut toucher alors que l'écran est verrouillé, ou un écran d'une application spécifique.

7. Le procédé selon l'une quelconque des revendications 1 à 6, dans lequel l'opération tactile comprend une ou une combinaison d'un simple clic, d'un double clic et d'une pression longue.

8. Le procédé selon l'une quelconque des revendications 1 à 7, dans lequel le seuil est compris entre 30 et 45 degrés.

9. Un appareil portable (20), comprenant:

un écran tactile (22), détectant une opération tactile et affichant une fenêtre;
un détecteur de mouvement (24), détectant un angle de rotation et une direction de rotation de l'appareil portable (20) par rapport à un axe de référence perpendiculaire à l'écran tactile (22); et
un processeur, couplé à l'écran tactile (22) et au capteur de mouvement (24), déterminant si l'angle de rotation détecté par le capteur de mouvement (24) dépasse un seuil lorsque l'opération tactile est détectée par l'écran tactile (22) et le réglage de la dimension d'une fenêtre affichée sur l'écran tactile (22) en fonction d'une position de contact de l'opération tactile et de la direction de rotation lorsque l'angle de rotation est supérieur au seuil.

10. L'appareil portable selon la revendication 9, dans lequel le processeur ajuste proportionnellement la dimension de la fenêtre en fonction d'une zone carrée formée par la position tactile et par un bord latéral et par un bord inférieur de l'écran tactile (22), de sorte que la fenêtre ajustée est situé dans la zone carrée et a une hauteur identique à une hauteur de la zone carrée ou a une largeur identique à la largeur de la zone carrée, dans lequel le bord latéral étant le bord latéral dans le sens de rotation ou le bord latéral ayant une distance la plus longue relativement à la position de contact.

11. L'appareil portable selon la revendication 9 ou 10, dans lequel le processeur détermine en outre si un autre angle de rotation détecté par le capteur de mouvement (24) est inversé par rapport à l'angle de rotation et au-dessus du seuil lorsqu'une autre opération de contact est détectée sur l'écran tactile (22), et ajuste la dimension de la fenêtre pour la ramener à sa dimension originelle lorsque ledit autre angle de rotation est inversé par rapport à l'angle de rotation et excède le seuil.

12. L'appareil portable selon l'une quelconque des revendications 9 à 11, dans lequel le processeur détermine en outre si l'opération tactile est située dans une zone prédéterminée lorsque l'opération tactile est détectée par l'écran tactile (22) et détecte l'angle de rotation et la direction de rotation de l'appareil portable (20) par rapport à l'axe de référence perpendiculaire à l'écran tactile (22) en utilisant le détecteur de mouvement (24) lorsque l'opération tactile est dans la zone prédéterminée, dans lequel la zone prédéterminée comprend un écran à déverrouiller, une zone à l'exception d'au moins un objet que l'on peut toucher dans un écran verrouillé, ou un écran d'une application spécifique.

13. L'appareil portable selon l'une quelconque des revendications 9 à 12, dans lequel l'opération tactile comprend une ou une combinaison d'un simple clic, d'un double clic et d'une pression longue.

14. L'appareil portable selon l'une quelconque des revendications 9 à 13, dans lequel le seuil est compris entre 30 et 45 degrés.

15. L'appareil portable selon l'une quelconque des revendications 9 à 14, dans lequel le capteur de mouvement (24) comprend un ou plusieurs des éléments suivants en combinaison : un capteur de gravité (capteur G), un capteur magnétique, un capteur gyroscopique et une boussole électronique.

FIG. 1

Touch screen

22

Motion sensor

24

Processor

26

20

Portable apparatus

# FIG. 2

Detecting a touch operation performed on the touch screen — S302

Detecting a rotation angle and a rotation direction of the portable apparatus relative to a reference axis perpendicular to the touch screen by using the motion sensor — S304

S306

Determining whether the rotation angle is over a threshold

No

Yes

Adjusting a size of a window displayed on the touch screen according to a touch position of the touch operation and the rotation direction — S308

# FIG. 3

Detecting a touch operation performed on the touch screen ⸺ S402

Detecting a rotation angle and a rotation direction of the portable apparatus relative to a reference axis perpendicular to the touch screen by using the motion sensor ⸺ S404

Determines whether the rotation angle is over a threshold — S406
No

Yes

Determining the rotation direction — S408

Clockwise

Counterclockwise

S410

Proportionally adjusting the size of the window according to a square area formed by the touch position and the right edge and the lower edge of the touch screen, such that the adjusted window is located within the square area and has a height or a width identical to a height or a width of the square area

S412

Proportionally adjusting the size of the window according to a square area formed by the touch position and the left edge and the lower edge of the touch screen, such that the adjusted window is located within the square area and has a height or a width identical to a height or a width of the square area

FIG. 4

FIG. 5

FIG. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012256959 A1
- US 2009303204 A1
- CN 103076972 A